Europäisches Patentamt

European Patent Office

Office européen des brevets

(19)

(11) Numéro de publication : **0 022 402**
**B1**

(12)

# FASCICULE DE BREVET EUROPÉEN

(45) Date de publication du fascicule du brevet :
26.09.84

(51) Int. Cl.³ : **H 01 M   2/18, H 01 M 10/12**

(21) Numéro de dépôt : **80400985.0**

(22) Date de dépôt : **30.06.80**

(54) Accumulateur électrique au plomb.

(30) Priorité : **04.07.79 FR 7917384**

(43) Date de publication de la demande :
**14.01.81 Bulletin 81/02**

(45) Mention de la délivrance du brevet :
**26.09.84 Bulletin 84/39**

(84) Etats contractants désignés :
**AT BE CH DE FR GB IT LI LU NL SE**

(56) Documents cités :
**FR-A-   951 761**
**FR-A- 1 045 872**
**FR-A- 1 154 599**
**FR-A- 1 243 515**
**FR-A- 2 266 318**
**US-A- 2 004 304**
**US-A- 2 422 130**
**US-A- 2 742 521**
**US-A- 2 909 588**
**US-A- 3 898 099**

(73) Titulaire : **COMPAGNIE GENERALE D'ELECTRICITE**
**Société anonyme dite:**
**54, rue La Boétie**
**F-75382 Paris Cedex 08 (FR)**

(72) Inventeur : **Pascon, Claude**
**2, Allée des Marronniers**
**F-92350 Le Plessis-Robinson (FR)**
Inventeur : **Marcellin, Georges**
**1, rue Gaston Gourdon**
**F-91270 Vigneuse sur Seine (FR)**

(74) Mandataire : **Weinmiller, Jürgen et al**
**Zeppelinstrasse 63**
**D-8000 München 80 (DE)**

EP 0 022 402 B1

## Description

La présente invention concerne un accumulateur électrique au plomb pour batterie de traction. Un tel accumulateur comporte très schématiquement une pluralité d'éléments constitués chacun par une plaque négative, une plaque positive et des moyens de séparation intercalés entre celles-ci.

Un problème technique fondamental est de réaliser un accumulateur de grande énergie massique qui soit très endurant.

Il faut donc notamment parvenir à améliorer le rendement des matières actives, tout en évitant leur gonflement et le « shedding » de la matière positive ; il faut également réduire la corrosion des grilles maintenant ces matières actives.

Les moyens de séparation de l'accumulateur jouent un rôle très important dans l'amélioration de tous les facteurs précités.

On a déjà proposé de nombreux types de moyens de séparation comportant des séparateurs microporeux.

Ainsi, dans le brevet français FR-A-1 045 872 les moyens de séparation comportent entre deux plaques positive et négative deux séparateurs microporeux et des intercalaires définissant des canaux entre ces séparateurs. Chaque séparateur est formé de préférence à partir d'une terre d'infusoires qui se compose de squelettes de diatomées et d'algues monocellulaires ; un matelas en fibres de verre est intégré dans ce matériau.

La présente invention a pour but de réaliser un accumulateur au plomb comprenant des séparateurs microporeux tels qu'ils apportent une nette amélioration du point de vue de la tenue en endurance.

La présente invention a pour objet un accumulateur électrique au plomb pour batterie de traction, comprenant une pluralité d'éléments constitués chacun par une plaque positive, une plaque négative et des moyens de séparation intercalés entre elles, comportant un premier et un second séparateurs microporeux entre lesquels des intercalaires définissent des canaux, caractérisé par le fait que lesdits séparateurs sont en PVC, la plaque positive et la plaque négative ont une hauteur comprise entre 100 mm et 600 mm, l'épaisseur des canaux est comprise entre 0,5 mm et 2 mm, et la largeur des canaux est comprise entre 2 mm et 10 mm.

Lorsque les plaques positives et négatives de l'accumulateur présentent une hauteur comprise entre 100 mm et 300 mm, l'épaisseur des canaux est comprise de préférence entre 0,7 mm et 2 mm.

Lorsque ces plaques présentent une hauteur comprise entre 300 mm et 600 mm, l'épaisseur des canaux est de préférence comprise entre 1 mm et 2 mm.

La largeur des canaux est de préférence comprise entre 3 mm et 7 mm. Ces caractéristiques permettent d'obtenir un accumulateur d'énergie volumique satisfaisante présentant une plus grande durée de vie que les accumulateurs de l'art antérieur.

Selon un premier mode de réalisation, lesdits intercalaires sont réalisés par des nervures présentées par l'un desdits séparateurs. Selon un mode de réalisation préférentiel, ledit premier séparateur, appliqué contre la plaque négative, comporte des premières nervures sur sa face tournée vers la plaque positive, et ledit second séparateur, appliqué contre la plaque positive, comporte des secondes nervures sur sa face tournée vers la plaque négative. Les premières et les secondes nervures sont parallèles entre elles ; l'intervalle entre deux nervures d'un même séparateur est compris entre 5 mm et 20 mm. Les deux séparateurs sont de préférence identiques et les nervures de l'un s'appuient sur l'autre dans l'intervalle séparant deux de ses nervures. L'épaisseur d'une nervure est comprise entre 0,5 mm et 3 mm.

Dans toutes ces variantes, les canaux orientés verticalement (dans la position normale d'utilisation de l'accumulateur), permettent une circulation de l'électrolyte et des gaz, et ainsi un fonctionnement homogène des matières actives suivant toute la surface des plaques. De préférence, on adjoint à l'accumulateur un dispositif de circulation forcée de l'électrolyte.

Par ailleurs il est préférable que les faces du premier et du second séparateurs respectivement en contact avec les plaques positive et négative présentent des stries parallèles entre elles, séparées par une distance comprise entre 0,8 mm et 1,4 mm et permettant une meilleure évacuation des gaz, notamment pendant la recharge.

La séparation peut être complétée par au moins une feuille de laine de verre interposée entre le second séparateur et la plaque positive. Les séparateurs microporeux ou les feuilles de laine de verre peuvent être prolongés de façon à entourer les bords des plaques.

Selon un mode de réalisation particulièrement avantageux, la matière active des plaques positives est consolidée par un liant plastique du type PTFE, la proportion en poids de PTFE étant comprise entre 0,5 % et 2,5 %.

D'autres caractéristiques et avantages de la présente invention apparaîtront au cours de la description suivante qui sera faite à l'aide du dessin annexé donné à titre illustratif, mais nullement limitatif, et dans lequel :

la figure 1 est une vue partielle très schématique en coupe d'une plaque positive, d'une plaque négative et des moyens de séparation selon l'invention qui y sont associés,

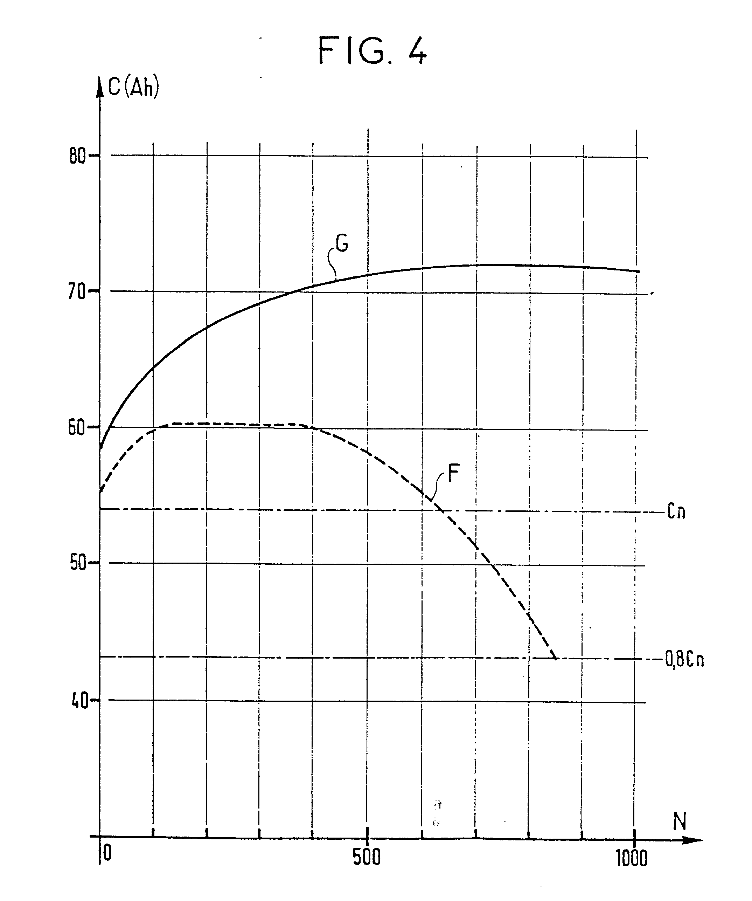

les figures 2, 3 et 4 reprennent des courbes représentatives de la tenue en endurance des accumulateurs de l'art antérieur et des accumulateurs selon l'invention.

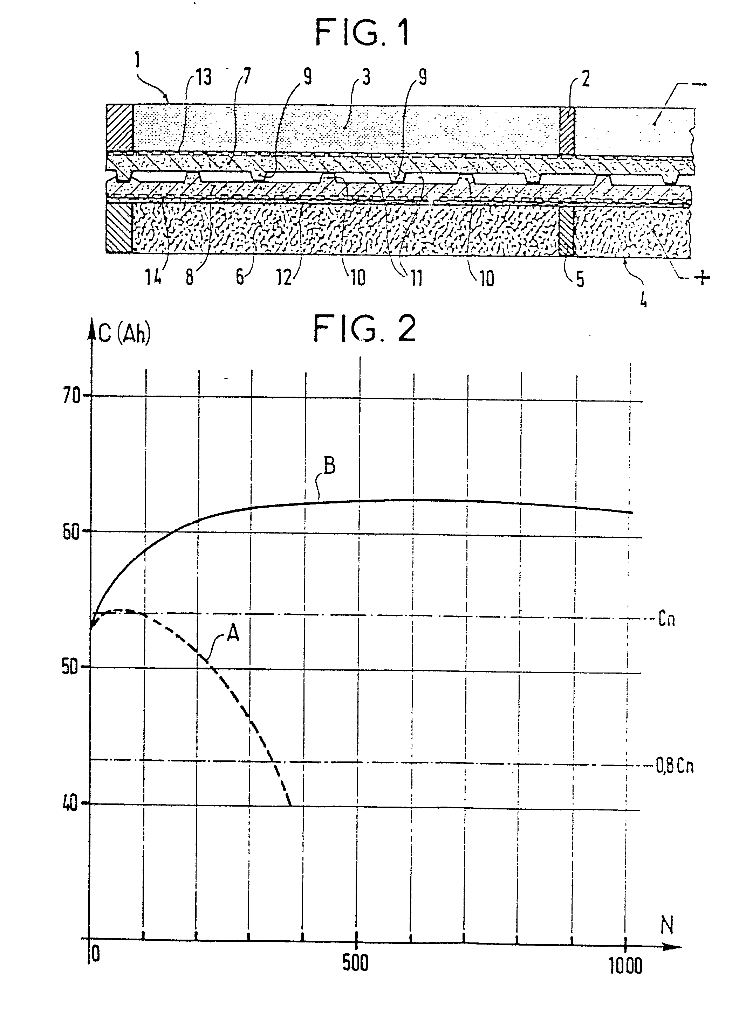

On voit sur la figure 1 une plaque négative 1 avec sa grille 2 et sa matière active 3, et une plaque positive 4 avec sa grille 5 et sa matière active 6. Les plaques présentent une hauteur de 175 mm. Un séparateur en PVC microporeux 7, disposé contre la plaque négative 1, comporte des nervures 9 parallèles entre elles sur sa face tournée vers la plaque positive 4 ; une feuille de laine de verre 12 est appliquée contre la plaque positive 4 et un séparateur en PVC microporeux 8 est interposé entre le séparateur 7 et la feuille 12. Le séparateur 8 comporte des nervures 10 parallèles entre elles et parallèles aux nervures 9 de façon à définir des canaux 11 (verticaux dans la position normale d'utilisation de l'accumulateur) pour permettre la circulation de l'électrolyte. Les séparateurs 7 et 8 sont de préférence identiques ; la distance entre deux nervures 9 ou 10 est égale à 10 mm environ ; l'épaisseur d'une nervure 9 ou 10 est de l'ordre de 0,7 mm, l'épaisseur totale d'un séparateur microporeux est de l'ordre de 1,5 mm, et celle des deux séparateurs 7 et 8 est de l'ordre de 2,25 mm.

Les canaux définis par les séparateurs présentent donc une épaisseur de l'ordre de 0,7 mm et une largeur de l'ordre de 4 mm.

Les faces 13 et 14 des séparateurs 7 et 8 présentent de fines stries parallèles entre elles, séparées par une distance de l'ordre du millimètre et pouvant être comprise entre 0,8 mm et 1,4 mm.

Exemple I

On réalise deux accumulateurs A et B de capacité nominale $Cn$ en 5 heures égale à 54 Ah et comportant chacun quatre plaques négatives 1 et trois plaques positives 4.

L'accumulateur A conforme à l'art antérieur est muni de moyens de séparation constitués par un séparateur 7 et une feuille de laine de verre 12.

L'accumulateur B conforme à l'invention est construit suivant le schéma de la figure 1.

Ces deux accumulateurs ont subi des cycles de charge/décharge définis de la façon suivante : la charge a été effectuée au régime $Cn/4$ pendant 2 heures, puis au régime $Cn/10$ pendant 3 heures ; la décharge a été effectuée au régime $Cn/4$ jusqu'à une profondeur de décharge de $0,7\ Cn$.

Sur la figure 2, les courbes A et B relatives aux accumulateurs A et B représentent les variations de la capacité C en ampère heures en fonction du nombre de cycles N. La courbe B s'arrête à 1 000 cycles, mais les essais se poursuivent. On peut voir déjà le progrès apporté par la structure de la figure 1 du point de vue de la tenus en endurance de la batterie.

Exemple II

On réalise quatre accumulateurs D, $E_1$, $E_2$, $E_3$ répondant aux caractéristiques suivantes :

D et $E_1$ diffèrent respectivement des accumulateurs A et B par le fait que la matière active de leurs plaques positives 4 est consolidée à l'aide d'un liant de type PTFE, le rapport des poids de PTFE et de matière active étant de l'ordre de 2,5 %.

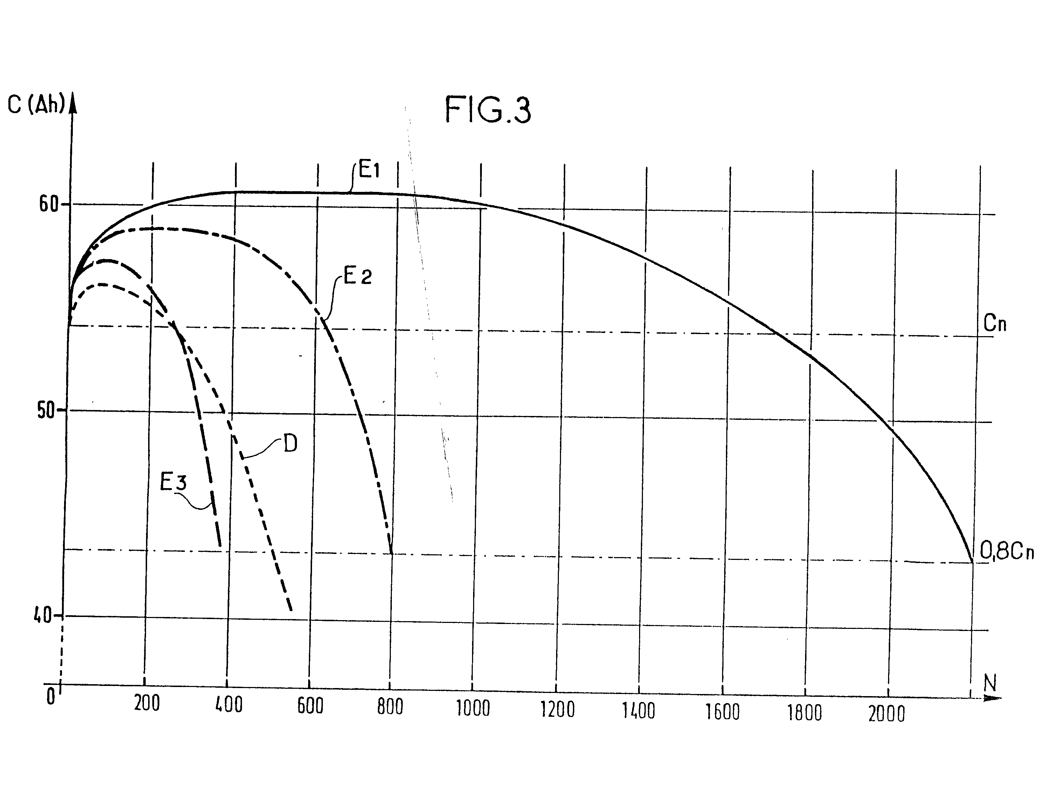

Les courbes D et $E_1$ de la figure 3 confirment l'intérêt des moyens de séparation de la figure 1 associé à celui du liant de consolidation de la matière active positive du point de vue de l'endurance.

Les accumulateurs $E_2$ et $E_3$ présentent le même agencement que l'accumulateur $E_1$ mais ils en diffèrent par les dimensions des canaux définis par leurs séparateurs. Ainsi, pour $E_2$ L'épaisseur d'un canal est 0,35 mm et sa largeur est 4 mm ; pour $E_3$ l'épaisseur d'un canal est 0,7 mm et sa largeur 11 mm. Les courbes $E_2$ et $E_3$ de la figure 2 montrent clairement la dégradation des performances de l'accumulateur lorsque les dimensions des canaux sortent des fourchettes prévues selon l'invention.

Pour des accumulateurs dont les plaques ont des hauteurs supérieures à 300 mm, et inférieures à 600 mm, il faut mettre en œuvre de préférence des canaux d'épaisseur supérieure à 1 mm afin d'obtenir de bons résultats.

Exemple III

On réalise deux accumulateurs F et G analogues respectivement aux accumulateurs D et $E_1$ mais dans lesquels est prévu un dispositif de circulation forcée d'électrolyte, avec un débit de quelques litres à l'heure. Les courbes F et G de même type que les courbes des figures 2 et 3 illustrent l'amélioration de la tenue en endurance des accumulateurs lorsque l'on conjugue tous les éléments de l'invention.

Bien entendu, l'invention n'est pas limitée aux exemples qui viennent d'être décrits. On pourra notamment remplacer l'un des séparateurs par un séparateur plan, l'intervalle entre deux nervures du second séparateur étant diminué de moitié.

Dans tous les cas, les deux séparateurs microporeux appliqués respectivement contre les plaques positive et négative s'opposent au gonflement des matières actives, les canaux d'épaisseur supérieure à 0,5 mm qu'ils définissent assurent l'homogénéisation des concentrations d'électrolyte et leurs stries favorisent l'évacuation des gaz.

## Revendications

1. Accumulateur électrique au plomb pour batterie de traction, comprenant une pluralité d'éléments constitués chacun par une plaque positive (4), une plaque négative (1) et des moyens de séparation (7, 8) intercalés entre elles, comportant un premier et un second séparateurs microporeux entre lesquels des intercalaires définissent des canaux (11), caractérisé par le fait que lesdits séparateurs sont en PVC, la plaque positive et la plaque négative ont une hauteur comprise entre 100 mm et 600 mm, l'épaisseur des canaux (11) est comprise entre 0,5 mm et 2 mm, et la largeur des canaux (11) est comprise entre 2 mm et 10 mm.

2. Accumulateur électrique selon la revendication 1, caractérisé par le fait que, la plaque positive (4) et la plaque négative (1) présentant une hauteur comprise entre 100 mm et 300 mm, ladite épaisseur des canaux (11) est comprise entre 0,7 mm et 2 mm.

3. Accumulateur électrique selon la revendication 1, caractérisé par le fait que, la plaque positive (4) et la plaque (1) présentant une hauteur comprise entre 300 mm et 600 mm, ladite épaisseur des canaux (11) est comprise entre 1 mm et 2 mm.

4. Accumulateur électrique selon l'une des revendications 1 à 3, caractérisé par le fait que ladite largeur desdits canaux (11) est comprise entre 3 mm et 7 mm.

5. Accumulateur selon la revendication 1, caractérisé par le fait que les faces desdits séparateurs (7, 8) respectivement en contact avec les plaques négative et positive (1, 4) présentent des stries (13, 14) parallèles entre elles et séparées par une distance comprise entre 0,8 mm et 1,4 mm.

6. Accumulateur selon l'une des revendications 1 à 4, caractérisé par le fait que lesdits intercalaires sont réalisés par des nervures présentées par l'un desdits séparateurs.

7. Accumulateur selon l'une des revendications 1 à 4, caractérisé par le fait que ledit premier séparateur (7) appliqué contre la plaque négative (1) présente des premières nervures (9) sur sa face tournée vers la plaque positive (4), et que ledit second séparateur (8) appliqué contre la plaque positive (4) présente des secondes nervures (10) sur sa face tournée vers la plaque négative (1), lesdites premières et secondes nervures parallèles entre elles réalisant lesdits intercalaires.

8. Accumulateur selon la revendication 7, caractérisé par le fait que ledit premier et ledit second séparateurs sont identiques.

9. Accumulateur selon l'une des revendications 7 et 8, caractérisé par le fait que l'intervalle séparant deux desdites nervures (9, 10) d'un même séparateur est compris entre 5 mm et 20 mm.

10. Accumulateur selon l'une des revendications 7 à 9, caractérisé par le fait que l'épaisseur d'une desdites nervures (9, 10) est comprise entre 0,5 et 3,5 mm.

11. Accumulateur selon des revendications précédentes, caractérisé par le fait qu'il comporte un dispositif de circulation forcée d'électrolyte.

12. Accumulateur selon l'une des revendications précédentes, caractérisé par le fait que la matière active de ladite plaque positive est consolidée par un liant plastique.

13. Accumulateur selon la revendication 12, caractérisé par le fait que la proportion en poids dudit liant dans ladite matière active positive est comprise entre 0,5 % et 2,5 %.

## Claims

1. An electrical lead accumulator for a traction battery, comprising a plurality of elements, each constituted by a positive plate (4), a negative plate (1) and separation means (7, 8) placed between these plates and comprising a first and a second microporous separator between which spacers define channels (11), characterized in that said separators are made of PVC, that the positive plate and the negative plate have a height in the range from 100 mm to 600 mm, the thickness of the channels is in the range from 0,5 mm to 2 mm and that the width of the channels (11) is comprised in the range from 2 mm to 10 mm.

2. An electrical accumulator according to claim 1, characterized in that, the positive plate (4) and the negative plate (1) presenting a height in the range from 100 mm to 300 mm, said thickness of the channels (11) is in the range from 0,7 mm to 2 mm.

3. An electrical accumulator according to claim 1, characterized in that, the positive plate (4) and the negative plate (1) presenting a height in the range from 300 mm to 600 mm, said thickness of the channels (11) is in the range from 1 mm to 2 mm.

4. An electrical accumulator according to one of the claims 1 to 3, characterized in that said width of said channels (11) is in the range extending from 3 mm to 7 mm.

5. An accumulator according to claim 1, characterized in that the surfaces of said separators (7, 8) which are in contact with the negative (1) and the positive plate (4) respectively present grooves (13, 14) which are mutually parallel and are spaced one from the others by a distance in the range from 0,8 mm to 1,4 mm.

6. An accumulator according to one of the claims 1 to 4, characterized in that said spacers are made of ribs presented by one of said separators.

7. An accumulator according to one of the claims 1 to 4, characterized in that said first separator (7) which is applied to the negative plate (1) presents first ribs (9) on its surface turned towards the positive plate (4), and that said second separator (8) which is applied to the positive plate (4) presents second ribs (10) on its surface turned towards the negative plate (1), said first and second ribs which are mutually parallel realizing said spacers.

8. An accumulator according to claim 7, characterized in that said first and second separators are of identical shape.

9. An accumulator according to one of the claims 7 and 8, characterized in that the interval separating two said ribs (9, 10) of one separator is in the range extending from 5 mm to 20 mm.

10. An accumulator according to one of the claims 7 to 9, characterized in that the thickness of one of said ribs (9, 10) is in the range from 0,5 mm to 3,5 mm.

11. An accumulator according to one of the preceding claims, characterized in that it comprises a device for the forced circulation of the electrolyte.

12. An accumulator according to one of the preceding claims, characterized in that the active material of said positive plate is consolidated by a plastic binder.

13. An accumulator according to claim 12, characterized in that the weight proportion of said binder in said active positive material is in the range extending from 0,5 % to 2,5 %.

**Ansprüche**

1. Elektrischer Blei-Akkumulator für eine Traktionsbatterie, der eine Vielzahl von Elementen aufweist, die je aus einer positiven Platte (4), einer negativen Platte (1) und aus zwischen ihnen angeordneten Separatormitteln (7, 8) bestehen, wobei die Separatormittel einen ersten und einen zweiten mikroporösen Separator aufweisen, zwischen denen Abstandshalter Kanäle (11) definieren, dadurch gekennzeichnet, daß die Separatoren aus PVC sind, die positive und die negative Platte eine Höhe zwischen 100 mm und 600 mm haben, die Dicke der Kanäle (11) zwischen 0,5 mm und 2 mm und die Breite der Kanäle (11) zwischen 2 mm und 10 mm liegt.

2. Elektrischer Akkumulator nach Anspruch 1, dadurch gekennzeichnet, daß, wenn die positive (4) und die negative Platte (1) eine Höhe zwischen 100 und 300 mm haben, die Dicke der Kanäle (11) zwischen 0,7 und 2 mm liegt.

3. Elektrischer Akkumulator nach Anspruch 1, dadurch gekennzeichnet, daß, wenn die positive Platte (4) und die negative Platte (1) eine Höhe zwischen 300 mm und 600 mm haben, die Dicke der Kanäle (11) zwischen 1 mm und 2 mm liegt.

4. Elektrischer Akkumulator nach einem der Ansprüche 1 bis 3, dadurch gekennzeichnet, daß die Breite der Kanäle (11) zwischen 3 mm und 7 mm liegt.

5. Akkumulator nach Anspruch 1, dadurch gekennzeichnet, daß die Seiten der Separatoren (7, 8), die in Kontakt mit der positiven bzw. der negativen Platte (1, 4) stehen, Rillen (13, 14) aufweisen, die untereinander parallel und voneinander durch einen Abstand getrennt sind, der zwischen 0,8 mm und 1,4 mm liegt.

6. Akkumulator nach einem der Ansprüche 1 bis 4, dadurch gekennzeichnet, daß die Abstandshalter aus Rippen auf einem der Separatoren bestehen.

7. Akkumulator nach einem der Ansprüche 1 bis 4, dadurch gekennzeichnet, daß der erste Separator (7), der auf der negativen Platte (11) liegt, erste Rippen (9) auf der Seite aufweist, die der positiven Platte (4) zugewandt ist, und daß der zweite Separator (8), der auf der positiven Platte (4) liegt, zweite Rippen (10) auf der Seite aufweist, die der negativen Platte (1) zugewandt ist, wobei die ersten und zweiten Rippen, die untereinander parallel sind, die Abstandshalter bilden.

8. Akkumulator nach Anspruch 7, dadurch gekennzeichnet, daß der erste und der zweite Separator einander gleichen.

9. Akkumulator nach einem der Ansprüche 7 und 8, dadurch gekennzeichnet, daß der Abstand, der zwei der Rippen (9, 10) eines Separators trennt, zwischen 5 mm und 20 mm beträgt.

10. Akkumulator nach einem der Ansprüche 7 bis 9, dadurch gekennzeichnet, daß die Dicke einer dieser Rippen (9, 10) zwischen 0,5 mm und 3,5 mm liegt.

11. Akkumulator nach einem der vorstehenden Ansprüche, dadurch gekennzeichnet, daß er eine Zwangsumlaufvorrichtung für den Elektrolyten aufweist.

12. Akkumulator nach einem der vorstehenden Ansprüche, dadurch gekennzeichnet, daß die aktive Masse der positiven Platte durch ein Plastikbindemittel konsolidiert ist.

13. Akkumulator nach Anspruch 12, dadurch gekennzeichnet, daß der Gewichtsanteil des Bindemittels in der aktiven positiven Masse zwischen 0,5 und 2,5 % beträgt.

# FIG. 1

# FIG. 2

FIG.3

C (Ah)

E1

E2

D

E3

Cn

0,8Cn

N

0022402

# FIG. 4